# EUROPEAN PATENT SPECIFICATION

(11) **EP 0 722 028 B1**
(45) Date of publication and mention of the grant of the patent: **01.09.1999**
(21) Application number: 96300180.5
(22) Date of filing: 10.01.1996
(51) Int. Cl.: E05B 17/04

(54) **Door lock for vehicles**
Kraftwagentürschloss
Serrure de porte pour véhicules

(30) Priority: 14.01.1995 GB 9500718
(43) Date of publication of application: 17.07.1996
(73) Proprietor: MERITOR LIGHT VEHICLE SYSTEMS (UK) LIMITED, Birmingham B30 3DW (GB)
(72) Inventor: Fisher, Sidney Edward, Solihull, West Midlands B90 2HB (GB)
(74) Representative: Barnfather, Karl Jon, Dr.

(56) References cited:
- DE-A- 4 319 295
- FR-A- 1 175 848
- US-A- 1 725 544
- US-A- 2 004 435
- US-A- 3 143 874
- US-A- 4 014 195

## Description

This invention relates to key actuated locks for vehicle doors and other lockable body closures such as hoods, bonnets, boot or trunk lids, fuel filler flaps and the like.

The door or other closure commonly incorporates latch mechanism releasably engaging a striker or other element on the frame or other surrounding fixed structure of the vehicle body to retain the door or other closure safely shut and which can be switched between locked and unlocked condition for security against unauthorised access.

The latch mechanism may incorporate electrically powered or other servo actuators forming part of a central locking system of the vehicle whereby more than one door or other closure can be locked and unlocked simultaneously from inside or outside the vehicle, nevertheless at least some of the doors of a typical passenger vehicle, usually the front driver's and passenger door, will be provided with traditional manual key controlled cylinder or similar mechanical locks having tumblers or levers releasable only by insertion of a matching key into a keyhole opening to the exterior of the relevant door.

A latch assembly with the features of the preamble of claim 1 is known from DE-A-4319295.

The object of the invention is to provide a particularly effective and adaptable drive connection between cylinder or other lock and the associated latch mechanism.

According to the invention there is provided a latch assembly as distinguished by the characterising part of claim 1.

An example of the invention is now more particularly described with reference to the accompanying drawings in which:-
Figure 1 is an elevation, partly in section, of a vehicle door and latch assembly, and
Figure 2 is a part sectional perspective view of coupling means and related parts of said assembly.

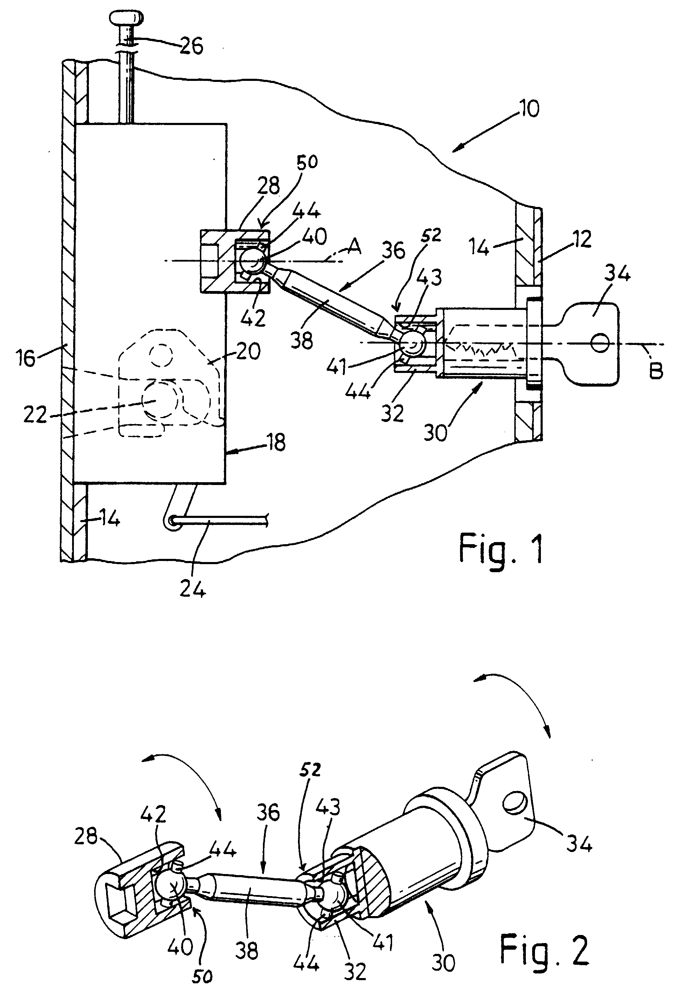

A door 10 of a motor vehicle is shown diagrammatically and in part only in Figure 1 being of conventional construction to include a generally vertical outer panel 12 forming part of a hollow metal frame-like carcass 14 which also mounts a generally vertical interior trim panel 16.

Mounted within the door at the vertical edge part remote from the hinges is a latch unit 18, again of conventional construction and not therefore described in detail. The unit includes latch mechanism controlling a rotating claw 20 which coacts with a striker formation 22 on the door frame for releasably keeping the door latched shut.

Unlatching is effected, again in conventional manner, by operating an interior or exterior door handle (not shown) through handle linkage 24.

Latch unit 18 also includes locking mechanism, again of conventional construction, shiftable between locked and unlocked condition either by means of a sill button 26 inside door 10 or by angular displacement of an actuator element 28 about horizontal axis A (Fig. 1) within the door.

Outer panel 12 mounts a cylinder and tumbler type lock unit 30 of known construction whose inner end includes a drive output element 32 angularly displaceable along with the lock cylinder about horizontal axis B (Fig.1) by means of a matched key 34 when inserted in a key hole opening to the door exterior.

It will be seen that the two axes A and B are non-coincident, in this example though parallel they are spaced apart vertically.

Element 28 of latch unit 18 and element 32 of lock unit 30 are drive connected by coupling means 36 comprising a rigid shaft 38 having headed ends 40,41 received respectively in axial sockets 42, 43 of elements 28 and 32. Each socket includes a pair of opposing keyways which engage the ends of cross-pins 44 in the headed ends 40,41. The universal couplings 50,52 each of cardan joint type so formed transmit angular or rotary drive between the two elements while accommodating their axial out of line relationship.

Coupling means 36 will thus accommodate a quite wide range of various axial offsets between the two elements 28 and 32 while providing positive transmission of torque from lock unit 30 to the latch unit 18 with little backlash or lost motion. Manufacture and assembly of the coupling means 36 is economical and simple and there are a minimum of moving parts.

Furthermore, with the preferred construction described above both elements 28 and 32 can have smooth cylindrical exteriors, as can shaft 38; the cardan joint couplings being wholly housed within the two elements. This provides good protection against accidental damage, corrosion or ingress of dirt. Additional protection against wear and longlife lubrication can be provided by filling sockets 42 and 43 with grease or other lubricant at the time of manufacture and providing protective flexible sleeves or caps surrounding shaft 38.

This construction also gives good security against any attempt to break or free the lock for unauthorised access to the vehicle as it will be difficult to engage any kind of tool or probe inserted into the door interior with coupling means 36 which could effect rotation thereof, shaft 38 will not easily be bent or broken, and even if it was so damaged, e.g. by pulling laterally thereon, it would merely be disengaged from sockets 42, 43 without otherwise affecting security.

To accommodate different arrangements or relationships between latch unit 18 and lock unit 30, e.g. for different models of vehicle while economising in component ranges, shaft 38 could be telescopically extendable or shafts in a range of lengths but having common heads and cross-pins could be provided for different applications.

It will be understood that the above arrangement will equally accomodate constructions in which axes A and B are in non-parallel relationship while still using identical components.

## Claims

1. Latch assembly for a vehicle door (10) or other closure comprising lockable latch mechanism (18), a separate key actuated lock unit (30), and coupling means (36) operatively drive connecting a locking input member (28) of said mechanism displaceable about a first axis (A) to a locking output member of said lock unit displaceable about a second axis (B), said coupling means including a rigid shaft (38), with universal cardan type connection enabling positive transmission of torque from the input member to the output member while said axis are off centre characterised in that the coupling means includes a first cardan type universal coupling (50) connecting one end of the shaft to the input member and a second cardan type universal coupling (52) operatively drive connecting the other end of the shaft to the locking output member.

2. An assembly as in Claim 1 characterised in that each cardan joint (50, 52) comprises a cylindrical socket (42,43) defined by an end portion of the respective locking member (28, 32) and having internal keyways, and a mating head (40, 41) on the respective end of the shaft (38) operatively received within said socket and having cross-pins (44) engaged in said keyways in use.

3. An assembly as in Claim 1 or 2 characterised in that the shaft is telescopically extendable.

4. A vehicle door characterised by a latch assembly as in claim 1, 2 or 3.

## Patentansprüche

1. Verriegelungsanordnung für eine Kraftfahrzeugtür (10) oder ein anderes Verschlußelement, enthaltend einen verschließbaren Verriegelungsmechanismus (18), eine gesonderte, mittels eines Schlüssels betätigbare Schloßeinheit (30) sowie ein Kupplungsmittel (36), das eine Wirkverbindung zwischen einem um eine erste Achse (A) verschiebbaren Verschluß-Eingangselement (28) des Mechanismus und einem um eine zweite Achse (B) verschiebbaren Verschluß-Ausgangselement der Schloßeinheit herstellt, wobei das Kupplungsmittel eine starre Welle (38) mit einer Kardan-Gelenkverbindung umfaßt, die auch bei nicht fluchtenden Achsen die positive Übertragung eines Drehmoments vom Eingangselement zum Ausgangselement ermöglicht,
dadurch gekennzeichnet, daß das Kupplungsmittel eine erste ein Ende der Welle mit dem Eingangselement verbindende Kardan-Gelenkkupplung (50) sowie eine zweite Kardan-Gelenkkupplung (52) enthält, die eine Antriebswirkverbindung zwischen dem anderen Ende der Welle und dem Schloßausgangselement herstellt.

2. Anordnung nach Anspruch 1, dadurch gekennzeichnet, daß jede Kardan-Gelenkkupplung (50, 52) eine von einem Endbereich des jeweiligen Schloßelements (28, 32) gebildete und mit inneren Keilnuten versehene zylindrische Hülse (42, 43) aufweist und ein komplementär geformtes Kopfstück (40, 41) am entsprechenden Ende der Welle (38) umfaßt, das in einer Wirkverbindung von der Hülse aufgenommen wird und Querstifte (44) besitzt, welche beim Einsatz mit den Keilnuten in Eingriff kommen.

3. Anordnung nach Anspruch 1 oder 2, dadurch gekennzeichnet, daß die Welle teleskopartig ausgefahren werden kann.

4. Kraftfahrzeugtür, gekennzeichnet durch eine Verriegelungsanordnung nach den Ansprüchen 1, 2 oder 3.

## Revendications

1. Ensemble de verrou pour une portière (10) de véhicule ou un autre dispositif de fermeture, comportant un mécanisme de verrouillage (18) pouvant être bloqué, une unité séparée de blocage (30) actionnée avec une clé et des moyens d'accouplement (36) reliant, selon une liaison d'entraînement active, un élément d'entrée de verrouillage (28) dudit mécanisme pouvant être déplacé autour d'un premier axe (A) vers un élément de sortie de blocage de ladite unité de blocage pouvant être déplacé autour d'un second axe (B), lesdits moyens de couplage comprenant un arbre rigide (38), une liaison du type joint de cardan universel permettant une transmission positive du couple de l'élément d'entrée à l'élément de sortie, tandis que lesdits axes sont excentrés, caractérisé en ce que les moyens d'accouplement comprennent un premier accouplement universel du type joint de cardan (50) reliant une extrémité de l'arbre à l'élément d'entrée et un second accouplement universel du type joint de cardan (52) reliant, selon une liaison d'entraînement en fonctionnement, l'autre extrémité de l'arbre à l'élément de sortie de verrouillage.

2. Ensemble selon la revendication 1, caractérisé en ce que chaque joint de cardan (50, 52) comprend une douille cylindrique (42, 43) définie par une partie d'extrémité de l'élément de verrouillage respectif (28, 32) et comportant des rainures internes de clavette, et une tête d'accouplement (40, 41) située sur l'extrémité respective de l'arbre (38) et logée de façon opérationnelle dans ladite douille et possédant des tétons transversaux (44) engagés dans lesdites rainures de clavette, en cours de fonctionnement.

3. Ensemble selon la revendication 1 ou 2, caractérisé en ce que l'arbre peut être déployé de façon télescopique.

4. Portière de véhicule caractérisée par un ensemble formant verrou selon la revendication 1, 2 ou 3.
